# EUROPEAN PATENT SPECIFICATION

(11) **EP 0 352 127 B1**
(45) Date of publication and mention of the grant of the patent: **01.02.1995**
(21) Application number: 89307427.8
(22) Date of filing: 20.07.1989
(51) Int. Cl.: B32B 27/00, B32B 27/10, B65D 65/40

(54) **Oxygen impermeable leak free container**
Sauerstoffundurchlässiger leckagefreier Behälter
Récipient sans fuites et imperméable à l'oxygène

(30) Priority: 22.05.1989 US 354591; 22.05.1989 US 354570; 22.05.1989 US 354571
(43) Date of publication of application: 24.01.1990
(73) Proprietor: INTERNATIONAL PAPER CO., CORP., Tuxedo Park, N.Y. 10987 (US)
(72) Inventor: Gibbons, Charles E., Mobile Alabama 36609 (US); Marano, Gerald A., Mobile Alabama 36695 (US); Kittrell, James M., Mobile Alabama 36609 (US); Whillock, Allan A., Mobile Mobile County Alabama (US); Lanham, Robert L., Mobile Alabama 36608 (US); Evans, Donald, South Mobile Alabama 36608 (US)
(74) Representative: Spence, Anne

(56) References cited:
- EP-A- 0 109 465
- EP-A- 0 159 609
- EP-A- 0 236 099
- US-A- 3 972 467
- US-A- 4 489 112

## Description

The invention relates to a heat-sealable barrier laminate structure suitable for producing an oxygen impermeable, leak free container and a container made from such a laminate. More particularly, this invention relates to barrier laminate structures which are comprised of specific high strength polymer resin layers which effectively prevent heat activation pinholes, cuts or cracking of oxygen barrier layers caused during scoring and especially during folding and heat sealing of the laminate in package formation.

Structures for paperboard containers using heat-sealable polymer resins and containing various oxygen barrier materials are disclosed in United States Patent Numbers 3972467, 4698246, 4701360, 4789575 and 4806399 all owned by the present Applicant.

Heat-sealable low density polyethylenes are well known to be components of current paperboard food and/or non-food packages which provide little barrier to the transmission of oxygen. Pinholes, cuts, score line cracks or channels, existent in conventional packaging and cartons, create additional leakage sites. It is well known that impermeable materials such as aluminium foil, polar brittle materials such as: polyacrylonitriles, polyvinylidene chlorides, polyvinyl chlorides, etc., provide varying degrees of barrier to the transfer of oxygen. However, all these materials lack the requisite strength at high rates of deformation, namely stress cracking resistance during scoring, package formation and distribution abuse to provide a resultant oxygen impermeable and airtight structure. In addition, leakage through the uncaulked channels of the carton in the top, bottom and side seams have likewise resulted in poor whole carton oxygen barrier properties.

The existing commercial structures for a paperboard carton for liquid and solid, food and non-food, products have utilized an easily heat-sealable barrier laminate composed of a paperboard substrate and a foil oxygen barrier layer, both being sandwiched between two thick layers of low density polyethylene (LDPE). The LDPE is a relatively inexpensive heat-sealable moisture barrier material. The conventional structure falters in that the foil layer which acts as the barrier to the transmission of oxygen in and out of the carton cracks during blank conversion, carton formation, and package distributions stages.

Bending and folding occurring during the formation of a gable "type" top, flat "type" top, or other folded, heat-sealable top closure, and a fin-sealed, or other conventional folded bottom puts excessive amounts of local stress on the thin foil and/or other oxygen barrier layer and, as typically results, cracks and pinholes appear.

An object of the present invention is to produce an oxygen impermeable, leak free container and/or laminate structure such as a paperboard based package or carton that prevents the transmission of gases therethrough, and in addition, prevents the escape of flavour components or the ingress of contaminates. A further object of the present invention is to produce such a package that is economical on a per-package cost basis, is fundamentally compatible with existing converting machinery and can be formed, filled and sealed at economically high speeds using conventional packaging machine temperatures, pressures and dwell times.

Accordingly in one embodiment the invention provides an oxygen barrier laminate structure suitable for producing an oxygen impermeable leak free container comprising:
a) a mechanically stable structural substrate selected from bleached paperboard, unbleached paperboard, corrugated board, high density polyethylene, high density polypropylene and multi-ply combinations thereof, having an inner and an outer surface;
b) an outer layer of heat-sealable polymer material applied on the outer surface of said mechanically stable structural substrate to form an intended outer layer of the laminate;
c) a first layer of caulking polymer resin located on the inner surface of said mechanically stable structural substrate;
d) an oxygen barrier material layer coated on the inner surface of the first caulking polymer resin layer;
e) an extrusion coated inner heat sealable product contactable polymer material layer forming the intended inner layer of the laminate wherein between the inner heat sealable product contactable layer and the oxygen barrier layer the laminate includes
f) a sandwich layer of a second caulking polymer resin, an abuse-resistant polymer resin layer, a third caulking polymer resin, all coextruded in that sequence on the inner surface of the oxygen barrier material layer; and
wherein the oxygen barrier material layer is selected from aluminium foil, ethylene vinyl alcohol copolymer, polyvinyl alcohol, polyethylene terephthalate, glycol-modified polyethylene terephthalate, acid modified polyethylene terephthalate, polybutylene terephthalate, vinylidene chloride copolymer, polyvinyl chloride polymer, vinyl chloride copolymer, polyamide polymer and polyamide copolymer, and
the caulking polymer resins are selected from ionomer type resins such as salts of ethylene methacrylic acid, ethylene acrylic acid copolymers, ethylene vinyl acetate copolymers, ethylene methylacrylate copolymers and/or ethylene based graft copolymers, and
the outer and inner heat sealable polymer material is low density polyethylene, linear low density polyethylene, medium density polyethylene or blends thereof,
the abuse resistant polymer is selected from polyamide polymers, polyethylene terephthalate, polybutylene terephthalate and ethylene vinyl alcohol copolymer, and the inner product contactable polymer material layer is heat-sealable with the outer layer of polymer material on conventional equipment at temperatures ranging from 121° to 260°C (250°F to 500°F), and the abuse resistant polymer exhibits a tensile strength of 4.78 Bar (10,000 p.s.i.) or greater.

In another aspect the invention provides an oxygen barrier laminate structure suitable for producing an oxygen impermeable leak free container comprising:
a) a mechanically stable structural substrate selected from bleached paperboard, unbleached paperboard, corrugated board, high density polyethylene, high density polypropylene and multi-ply combinations thereof, having an inner and an outer surface;
b) an outer layer of a heat-sealable polymer material applied on the outer surface of said mechanically stable structural substrate to form an intended outer layer of the laminate;
c) an extrusion coated inner heat sealable product contactable polymer material layer forming the intended inner layer of the laminate;
d) an oxygen barrier layer located between the substrate and the inner polymer material layer;
e) a first layer of caulking polymer resin located between the substrate and the inner polymer material layer;
characterised in that the oxygen barrier material layer forms part of a first inner sandwich layer of:
a first adhesive tie layer, the oxygen barrier material layer, and a second adhesive tie layer, all coated in that sequence on the inner surface of said mechanically stable structural substrate, and said first and second adhesive tie layers are selected from ethylene based copolymers with grafted functional groups, modified polyethylene resin containing vinyl acetate, acrylate and methacrylate comonomers, and polyethylene copolymer based material with grafted functional groups;
and characterised in that the first caulking polymer resin layer forms part of a second inner sandwich layer of: the first caulking polymer resin layer, an abuse-resistant polymer resin layer, a second caulking polymer resin layer, all coated in that sequence on the inner surface of the second adhesive tie layer of the first inner sandwich layer;
and wherein the oxygen barrier material layer is selected from aluminium foil, ethylene vinyl alcohol copolymer, polyvinyl alcohol, polyethylene terephthalate, glycol-modified polyethylene terephthalate, acid modified polyethylene terephthalate, polybutylene terephthalate, vinylidene chloride copolymer, polyvinyl chloride polymer, vinyl chloride copolymer, polyamide polymer and polyamide copolymer, and
the caulking polymer resins are selected from ionomer type resins such as salts of ethylene methacrylic acid, ethylene acrylic acid copolymers, ethylene vinyl acetate copolymers, ethylene methylacrylate copolymers and ethylene based graft copolymers, and
the outer and inner heat sealable polymer material is low density polyethylene, linear low density polyethylene, medium density polyethylene or blends thereof,
the abuse resistant polymer is selected from polyamide polymers, polyethylene terephthalate, polybutylene terephthalate and ethylene vinyl alcohol copolymer, and the inner product contactable polymer material layer is heat-sealable with the outer layer of polymer material on conventional equipment at temperatures ranging from 121° to 260°C (250°F to 500°F), and the abuse resistant polymer exhibits a tensile strength of 4.78 Bar (10,000 p.s.i.) or greater.

In a further aspect the invention provides an oxygen barrier laminate structure suitable for producing an oxygen impermeable leak free container comprising:
a) a mechanically stable structural substrate selected from bleached paperboard, unbleached paperboard, corrugated board, high density polyethylene, high density polypropylene and multi-ply combinations thereof, having an inner and an outer surface;
b) an outer layer of a heat-sealable polymer material applied on the outer surface of said mechanically stable structural substrate to form an intended outer layer of the laminate;
c) an extrusion coated inner heat sealable product contactable polymer material layer forming the intended inner layer of the laminate;
d) an oxygen barrier layer located between the substrate and the inner polymer material layer;
e) a first layer of caulking polymer resin located between the substrate and the inner polymer material layer
characterised in that the first caulking polymer resin layer and the oxygen barrier layer form part of a sandwich layer comprising the first caulking polymer resin layer, a first abuse-resistant polymer resin layer, the oxygen barrier material layer, a second abuse-resistant polymer resin layer, a second layer of a caulking polymer resin, all coextruded in that sequence on the interior surface of said mechanically stable structural substrate
and wherein the oxygen barrier material layer is selected from aluminium foil, ethylene vinyl alcohol copolymer, polyvinyl alcohol, polyethylene terephthalate, glycol-modified polyethylene terephthalate, acid modified polyethylene terephthalate, polybutylene terephthalate, vinylidene chloride copolymer, polyvinyl chloride polymer, vinyl chloride copolymer, polyamide polymer and polyamide copolymer, and
the caulking polymer resins comprise ionomer type resins such as salts of ethylene methacrylic acid, ethylene acrylic acid copolymers, ethylene vinyl acetate copolymers, ethylene methylacrylate copolymers and/or ethylene based graft copolymers, and
the outer and inner heat sealable polymer material is low density polyethylene, linear low density polyethylene, medium density polyethylene or blends thereof,
the abuse-resistant polymer is selected from polyamide polymers, polyethylene terephthalate, polybutylene terephthalate and ethylene vinyl alcohol copolymer, and the inner product contactable polymer material layer is heat-sealable with the outer layer of polymer material on conventional equipment at temperatures ranging from 121° to 260°C (250°F to 500°F), and the abuse-resistant polymer exhibits a tensile strength of 4.78 Bar (10,000 p.s.i.) or greater.

Should a penetration of the barrier layer or layers occur, the high-strength layer serves to maintain package integrity at the failure site. The high-strength, heat-resistant layer effectively prevents heat activation pinholes through the product contactable layer, even when non-foil barrier layers are used.

The cartons, side-seamed blanks, or containers constructed of the laminate of the present invention enable significant containment of gases in the container as well as preventing any migration of oxygen or contaminants into the package. The present invention has produced a suitable container which has the ultimate barrier properties. It utilizes a laminate which can be heat-sealed easily with its exterior amd interior layers being like, non-polar constituents. During the heat-seal processes, the scoring processes, the side-seaming processes, and the folding, forming and filling steps, the particular caulking polymer resins, namely ionomer type resins, ethylene acrylic acid copolmers, ethylene methacrylic acid copolymers, ethylene vinyl acetate copolymers, ethylene methylacrylate copolymers, polyethylene based grafted copolymers and the like, with melt indexes which allow them to flow during the heat-sealing processes (temperatures ranging from (250°F to 500°F) 121°C - 260°C). The particular selected resins act as a caulking agent to fill the channels produced during formation of the gable, or other type flat top, the fin-sealed, or other conventional type bottom and the skived side seam. Consequently, each of those gap areas is caulked to prevent the leakage of oxygen therethrough. In addition, the selection of the particular abuse-resistant polymer, namely polyamide type polymers, polyester type polymers and ethylene vinyl alcohol copolymers or the like acts to prevent any type of significant deformation damage to the foil or other oxygen barrier layer which would result in a crack or pinhole allowing for the seepage of oxygen therethrough.

In one application, the preferred laminate structure is produced using conventional co-extrusion coating equipment.

Secondly, this laminate is printed and forwarded through scoring dies and cutting dies to create flat blanks.

Thirdly, these flat blanks are skived and folded and side-seamed to create the side-seamed blanks. During the heat-sealing step of the side-seam operation, the resins which have been selected for their particular melt flow characteristics, caulk and seal along the seam. These side-seamed blanks are then forwarded to the particular customer for further assemblage.

Fourth, these side-seamed blanks are magazine fed into a machine wherein they are opened and placed on a mandrel, wherein sealing of the bottom takes place.

Typically, the bottom folding and sealing is where most of the damage to the interior thin barrier foil layer occurs in conventional cartons. Utilization of a particular strong polymer resin, comprising an abuse-resistant polymer, such as a polyamide type polymer, prevents cracking of the foil layer during the bottom sealing process. The bottom is fully heat-sealed into a flat configuration at which time caulking polymer resins, such as ionomer resins, flow in a caulking manner to seal the bottom. The container or package is then forwarded to the filling step. Next, the top is "pre-broken" and filled with the particular product and then top-sealed. The utilization of the novel abuse-resistant and caulking polymer resin constituents in the barrier laminate acts to prevent any damage to the foil or non-foil barrier layer and produce a top closure which has been caulked to doubly prevent any transport of oxygen.

The combination of high oxygen barrier materials such as ethylene vinyl alcohol copolymers or other brittle oxygen barrier materials coupled with abuse-resistant type polymer resins such as polyamide type polymers or the like, have applications in combination with almost any mechanically stable structural substrate. Particularly, multi-layer blow-molded containers incorporating abuse-resistant polymer resins in combination with high oxygen barrier materials is one of the novel applications of this invention.

Embodiments of laminate, in accordance with the invention, will now be described, by way of example only, with reference to the accompanying drawings of which Fig. 1 is a cross sectional elevation of the preferred embodiment of the laminate and Figures 2 and 3 are cross sectional elevations of alternative embodiments of laminates, all in accordance with the present invention.

### DETAILED DESCRIPTION OF THE INVENTION

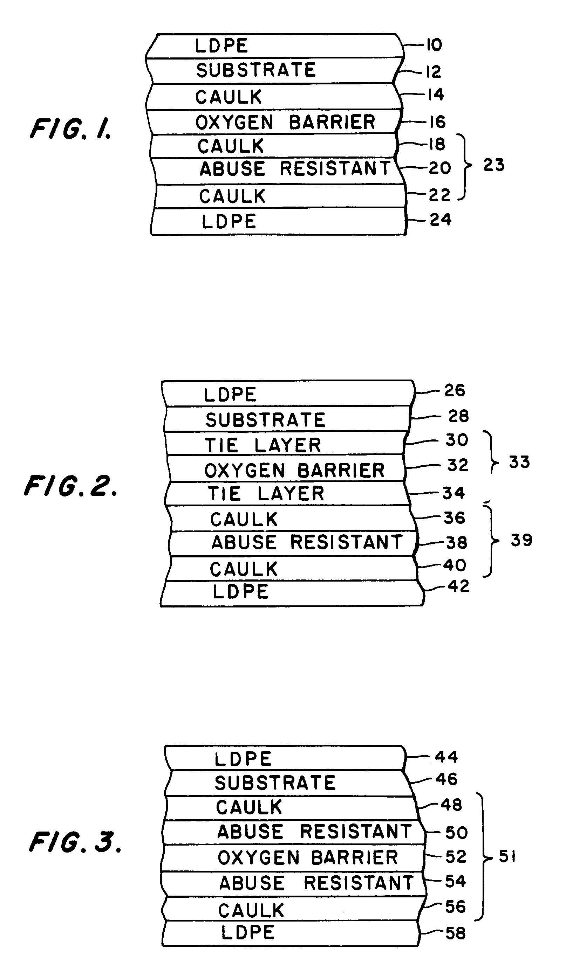

The preferred embodiment of the invention is for an hermetic, oxygen impermeable leak free and/or high oxygen barrier leak free package incorporating a laminate structure as disclosed in Fig. 1. All weights are expressed in pounds per 3,000 square feet (equivalent to 1 x 1.63gms/sq.metre). Discosed is a mechanically stable structural substrate 12 which is most suitably high grade paperboard stock, for example, 100-300 lbs (163-489 gms/sq. metre) or higher sized carton board, to which is applied on one side a coating of a low density polyethylene polymer 10 in a coating weight of about 12.0 to 30.0 lbs (19.6 to 48.9 gms/sq. metre). Layer 10 is the "gloss" layer which contacts the outer atmosphere. An extrusion coating grade LDPE having a melt flow index ranging from 4.0 to 7.0 is suitable for use herein. On the underside or interior portion of the paperboard substrate 12 is coated thereon a layer of a caulking polymer resin, 14, such as an ionomer type resin (Surlyn 1652), (SURLYN is a Trade Mark), in a coating weight of about 8.0 to 20.0 lbs (13.0 to 32.6 gms/sq. metre), and coated on the interior of the caulk is an absolute oxygen impermeable material or a high oxygen barrier material, such as a 0.000275-0.0005 inch (0.007 to .0128mm) layer of aluminium foil having a coating weight of about 12 lbs. (19.6 gms/sq metre), 16. Coated onto the foil is a sandwich layer, 23, of an abuse-resistant polymer resin such as a polyamide type polymer (nylon 6), 20, in a coating weight of about 3.0 to 10.0 lbs (4.89 to 16.3 gms/sq metre), sandwiched between two caulking polymer resin layers, 18 and 22, such as an ionomer type resin (Surlyn 1652), in coating weights of about 2 to 6 lbs. (3.26 to 9.78 gms/sq metre), and lastly coated onto the sandwich layer, 23, is a second layer of low density polyethylene polymer 24, in a coating weight of about 12.0 to 30.0 lbs. (19.6 to 48.9 gms/sq. metre) rendering the entire laminate structure heat sealable on conventional heat-seal equipment at conventional heat-seal temperatures (250°F to 500°F (121-260°C).

Referring to Fig.2, an alternate preferred embodiment of the laminate of the present invention is shown. The embodiment adds tie layers around the oxygen barrier material layer to facilitate better adhesion in the structure. In this alternate preferred embodiment, the mechanically stable structural substrate 28, such as a paperboard substrate, having a weight of 100-300 lbs. (163 to 489 gms/sq. metre) or higher for a half pint (.00024 m³) or smaller, pint (.00047m³), quart (.00094m³), half gallon (.0019m³), gallon (.00378m³) and multi-layer structures, has extrusion coated on its external surface a 12.0 to 30.0 lb. (19.6 to 48.9 gms sq. metre) layer of a low density polyethylene polymer 26. On the internal surface of the mechanically stable structural substrate 28, is applied a first sandwich layer 33, of an oxygen barrier material such as an ethylene vinyl alcohol copolymer, having a coating weight of about 8.0 to 20.0 lbs. (13 to 32.6 gms/sq. metre), 32, sandwiched between two tie layers, 30 and 34, such as a Plexar 175 (PLEXAR is a Trade Mark), having coating weights of about 2.0 to 6.0 lbs. (3.26 to 9.78 gms/sq metre) each. Coated onto the first sandwich layer 33 is a second sandwich layer 39 comprising an abuse-resistant polymer resin, such as a polyamidetype polymer (nylon 6), 38, having a coating weight of about 3.0 to 10.0 lbs (4.89 to 16.3 gms/sq metre) sandwiched between two caulking polymer resin layers, 36 and 40, having coating weights of about 2.0 to 6.0 lbs. (3.26 to 9.78 gms/sq metre) each. Finally, coated thereon, is a 12.0 to 30.0 lb. (19.6 to 48.9 gms/sq. metre) layer of a low density polyethylene polymer 42 which in combination with layer 26 renders the entire laminate structure heat-sealable.

Fig. 3 is another preferred embodiment of the present invention. A mechanically stable structural substrate such as a paperboard substrate having a weight of 100-300 lbs. (163 to 489 gms/sq. metre), or higher, 46, is coated with a 12.0 to 30.0 lb. (19.6 to 48.9 gms/sq. metre) layer of a low density polyethylene polymer on its exterior 44. On the interior layer of the substrate 46 is coated a five-layer sandwich, 51, having the following laminate structure: A first 2.0 to 6.0 lb. (3.26 to 9.78 gms/sq.metre) layer of a caulking resin material, such as a ionomer resin (Surlyn 1652), 48, a first 3.0 to 10.0 lb. (4.89 to 16.3 gms/sq. metre) layer of an abuse-resistant polymer resin 50, such as a polyamide-type polymer (nylon 6), an oxygen barrier material layer, 52, such as an ethylene vinyl alcohol copolymer, having a coating weight of about 8.0 to 20.0 lbs. (13 to 32.6 gms/sq.metre), a second 3.0 to 10.0 lb. (4.89 to 16.3 gms/sq. metre) abuse-resistant polymer resin layer, 54, such as a polyamide type polymer (nylon 6), and a second 2.0 to 6.0 lb. (3.26 to 9.78 gms/sq.metre) caulking polymer resin layer such as an ionomer resin (Surlyn 1652). Finally coated thereon is a second 12.0 to 30.0 lb. (19.6 to 48.9 gms/sq.metre) layer of a low density polyethylene polymer, 58, rendering the entire laminate structure heat-sealable on conventional heat-seal equipment at conventional heat-seal temperatures.

Although specific coating techniques have been described, any appropriate technique for applying the layers onto the mechanically stable structural substrate can be suitably employed, such as extrusion coating, coextrusion coating, extrusion lamination, coextrusion lamination and/or adhesive lamination of single layer and/or multilayer films to the mechanically stable structural substrate to achieve the stated inventions of this patent. The unique effect provided by the oxygen impermeable, leak free packages made from the laminate of the present invention is clearly demonstrated by the following Examples outlined in Table I. The preferred embodiment of the present invention is listed as the "International Paper oxygen impermeable half-gallon" (1983 ml) and it utilizes as its mechanically stable structural substrate a 282 lb. (460 gms/sq. metre) layer of paperboard. The preferred structure is compared in Table I to a variety of commercial paperboard based and non-paperboard based containers currently available in the market place and recommended for extended shelf-like applications.

**TABLE I**

| Average Whole Container Oxygen Transmission Rates (OTR) | | |
|---|---|---|
| Container | Avg., CC O₂/Pkg./Day (24°C (75°F), 50% RH, in Air) | OTR (CC/M²/Day) To Fill -Volume (ml) Ratio* |
| INTERNATIONAL PAPER (OXYGEN IMPERMEABLE HALF-GALLON (1983 ml)) | 0.000 | 0.000 |
| TOPPAN, EP-PAK (1500 ml) WITH PLASTIC FITMENT | 0.005 | 0.004 |
| INTERNATIONAL PAPER ASEPTIC (250 ml.) | 0.016 | 0.2 |
| TETRA BRIK-PAK (250 ml.) | 0.013 | 0.2 |
| CAPRI-SUN POUCH (200 ml.) | 0.01 | 0.3 |
| TREESWEET COMPOSITE FIBER CAN (1360 ml.) | 0.29 | 0.4 |
| CONOFFAST CUP (250 ml.) | 0.022 | 0.4 |
| INTERNATINAL PAPER HOT FILL (2000 ml.) | 1.11 | 0.5 |
| GALLON HDPE (BLOW MOLDED BOTTLE) | 2.75 | 0.5 |
| HALF-GALLON HDPE (BLOW MOLDED BOTTLE) | 1.98 | 1.1 |
| HYPAPAK (700 ml.) | 0.52 | 1.7 |
| HAWAIAN PUNCH COMPOSITE CAN (236 ml.) | 0.09 | 2.0 |
| COMBIBLOCK (250 ml.) | 0.21 | 3.2 |
| JUICE BOWL COMPOSITE CAN (355 ml.) | 0.34 | 4.1 |

| | | |
|---|---|---|
| * All numbers should be multiplied by 10⁻² | | |

It can be seen that the container prepared from a laminate of the present invention provides a complete hermetic barrier to the transport of oxygen.

The specially selected abuse-resistant polymer constituents such as the polyamide type polymers which make up the container are resilient enough to prevent any type of cutting, pinholing, or other damage caused during the converting, carton formation and distribution steps. In addition, the container utilizes ionomer type resins as caulking material for the channels and seams.

The mechanically stable structural substrate may consist of an unbleached or bleached paper or paperboard material, a corrugated type board material, a stiff polymer resin material such as high density polyethylene or polypropylene, and/or multi-ply combinations thereof.

The barrier layer may consist of an aluminum foil, an ethylene vinyl alcohol copolymer, a polyvinyl alcohol polymer, a polyethylene terephthalate, a polybutylene terephthalate, a glycol-modified polyethylene terephthalate, an acid-modified polyethylene terephthalate, a vinylidene chloride copolymer, a polyvinyl chloride polymer, a vinyl chloride copolymer, a polyamide polymer or a polyamide copolymer, or combinations of these materials.

The heat-sealable outer and inner polymer layers may consist of a low density polyethylene polymer, a linear low density polyethylene polymer, a medium density polyethylene polymer and/or blends thereof. The heat-sealable polymer materials contemplated for this invention all possess FDA approval for food contact applications and all have the ability to heat-seal on conventional equipment at conventional heat-seal temperatures (121°C to 260°C (250°F to 500°F)).

The preferred embodiments of the present invention utilize an aluminum foil layer as the primary absolute oxygen and flavor oil barrier material. All of the above-identified materials could be utilized in all alternate embodiments in place of the foil layer as well as in the preferred embodiment of the invention. The barrier and high strength layers may be applied as film laminations and/or as extrusion coatings.

The invention may be used in materials for all types of blank fed or web fed package forming equipment. The effectiveness of the laminate of the present invention as an oxygen impermeable package structure permits a significant extension of shelf-life of the products packaged in the containers.

The tough, high strength, abuse-resistant type materials can be selected from the following group of polymers: polyamide type polymers such as the preferred Nylon 6, or Nylon 6/66, Nylon 6/12, Nylon 6/9, Nylon 6/10, Nylon 11, Nylon 12; polyethylene terephthalate; polybutylene terephthalate; and ethylene vinyl alcohol copolymers; or other similar tough, high strength polymeric materials which have tensile strengths of 10,000 psi (4.78 Barr) or greater at conventional heat-seal temperatures (250°F to 500 °F) (121 to 260°C).

In addition, the high strengh, low fiscosity caulking resins preferred are selected from the following group of polymers: ionomer type resins, such as the preferred zinc or sodium salts of ethylene methacrylic acid (Surlyn 1652 or the like); ethylene acrylic acid copolymers; ethylene methacrylic acid copolymers; ethylene vinyl acetate copolymers; ethylene methylacrylate copolymers, ethylene based graft copolymers; and the like, all exhibiting melt flow indexes ranging from 4.5 to 14.0 decigrams per minute.

Adhesive tie layers preferred are selected from the following: Plexars (Trade Mark) from Quantum Chemical Co., more commonly known in the industry as ethylene based graft copolymers; CXA's (CXA is a Trade Mark) from Dupont, more commonly known in the industry as modified polyethylene resin containing vinyl acetate, acrylate and methacrylate comonomers; Admer's (Admer is a Trade Mark) from Mitsui, more commonly known in the industry as polyethylene copolymer based materials with grafted functional groups, and similar performing tie resins.

Additional abuse-resistant polymers, caulking polymer resins, mechanically stable structural substrates, oxygen barrier materials, and adhesive tie layers which meet the specifications and requirements outlined above could also be utilized to practice the present invention.

This invention provides a means of transforming the economical, high volume, gable top or flat top paperboard or non-paperboard food/non-food carton into an oxygen impermeable, leak free package that can be produced, sold, and filled economically at high production speeds, offering a low-cost hermetic packaging alternative to glass and metal, with the bulk of one embodiment of the package being bio-degradable paperboard from a renewable resource.

The novel container has the feature of acting as a stand alone abuse-resistant package for products which when contained in normal packaging are considered to be extremely difficult to contain. Such products include: detergents, synthetic sweeteners, oil products, etc. all of which can be stored in the novel structure embodied by the invention.

## Claims

1. An oxygen barrier laminate structure suitable for producing an oxygen impermeable leak free container comprising:
a) a mechanically stable structural substrate (12) selected from bleached paperboard, unbleached paperboard, corrugated board, high density polyethylene, high density polypropylene and multi-ply combinations thereof, having an inner and an outer surface;
b) an outer layer of heat-sealable polymer material (10) applied on the outer surface of said mechanically stable structural substrate to form an intended outer layer of the laminate;
c) a first layer of caulking polymer resin (14) located on the inner surface of said mechanically stable structural substrate;
d) an oxygen barrier material layer (16) coated on the inner surface of the first caulking polymer resin layer;
e) an extrusion coated inner heat sealable product contactable polymer material layer (24) forming the intended inner layer of the laminate wherein between the inner heat sealable product contactable layer (24) and the oxygen barrier layer (16) the laminate includes
f) a sandwich layer (23) of a second caulking polymer resin (18), an abuse-resistant polymer resin layer (20), a third caulking polymer resin (22), all coextruded in that sequence on the inner surface of the oxygen barrier material layer; and
wherein the oxygen barrier material layer is selected from aluminium foil, ethylene vinyl alcohol copolymer, polyvinyl alcohol, polyethylene terephthalate, glycol-modified polyethylene terephthalate, acid modified polyethylene terephthalate, polybutylene terephthalate, vinylidene chloride copolymer, polyvinyl chloride polymer, vinyl chloride copolymer, polyamide polymer and polyamide copolymer, and
the caulking polymer resins are selected from ionomer type resins such as salts of ethylene methacrylic acid, ethylene acrylic acid copolymers, ethylene vinyl acetate copolymers, ethylene methylacrylate copolymers and/or ethylene based graft copolymers, and
the outer and inner heat sealable polymer material is low density polyethylene, linear low density polyethylene, medium density polyethylene or blends thereof,
the abuse resistant polymer is selected from polyamide polymers, polyethylene terephthalate, polybutylene terephthalate and ethylene vinyl alcohol copolymer, and the inner product contactable polymer material layer is heat-sealable with the outer layer of polymer material on conventional equipment at temperatures ranging from 121° to 260°C (250°F to 500°F), and the abuse resistant polymer exhibits a tensile strength of 4.78 Bar (10,000 p.s.i.) or greater.

2. An oxygen barrier laminate structure suitable for producing an oxygen impermeable leak free container comprising:
a) a mechanically stable structural substrate (28) selected from bleached paperboard, unbleached paperboard, corrugated board, high density polyethylene, high density polypropylene and multi-ply combinations thereof, having an inner and an outer surface;
b) an outer layer of a heat-sealable polymer material (26) applied on the outer surface of said mechanically stable structural substrate to form an intended outer layer of the laminate;
c) an extrusion coated inner heat sealable product contactable polymer material layer (42) forming the intended inner layer of the laminate;
d) an oxygen barrier layer (32) located between the substrate (28) and the inner polymer material layer (42);
e) a first layer of caulking polymer resin (36) located between the substrate (28) and the inner polymer material layer (42)
characterised in that the oxygen barrier material layer forms part of a first inner sandwich layer (33) of: a first adhesive tie layer (30), the oxygen barrier material layer (32), and a second adhesive tie layer (34), all coated in that sequence on the inner surface of said mechanically stable structural substrate (28), and said first and second adhesive tie layers are selected from ethylene based copolymers with grafted functional groups, modified polyethylene resin containing vinyl acetate, acrylate and methacrylate comonomers, and polyethylene copolymer based material with grafted functional groups;
and characterised in that the first caulking polymer resin layer forms part of a second inner sandwich layer (39) of: the first caulking polymer resin layer (36), an abuse-resistant polymer resin layer (38), a second caulking polymer resin layer (40), all coated in that sequence on the inner surface of the second adhesive tie layer of the first inner sandwich layer (33);
and wherein the oxygen barrier material layer is selected from aluminium foil, ethylene vinyl alcohol copolymer, polyvinyl alcohol, polyethylene terephthalate, glycol-modified polyethylene terephthalate, acid modified polyethylene terephthalate, polybutylene terephthalate, vinylidene chloride copolymer, polyvinyl chloride polymer, vinyl chloride copolymer, polyamide polymer and polyamide copolymer, and
the caulking polymer resins are selected from ionomer type resins such as salts of ethylene methacrylic acid, ethylene acrylic acid copolymers, ethylene vinyl acetate copolymers, ethylene methylacrylate copolymers and ethylene based graft copolymers, and
the outer and inner heat sealable polymer material is low density polyethylene, linear low density polyethylene, medium density polyethylene or blends thereof,
the abuse resistant polymer is selected from polyamide polymers, polyethylene terephthalate, polybutylene terephthalate and ethylene vinyl alcohol copolymer, and the inner product contactable polymer material layer is heat-sealable with the outer layer of polymer material on conventional equipment at temperatures ranging from 121° to 260°C (250°F to 500°F), and the abuse resistant polymer exhibits a tensile strength of 4.78 Bar (10,000 p.s.i.) or greater.

3. An oxygen barrier laminate structure suitable for producing an oxygen impermeable leak free container comprising:
a) a mechanically stable structural substrate (46) selected from bleached paperboard, unbleached paperboard, corrugated board, high density polyethylene, high density polypropylene and multi-ply combinations thereof, having an inner and an outer surface;
b) an outer layer of a heat-sealable polymer material (44) applied on the outer surface of said mechanically stable structural substrate to form an intended outer layer of the laminate;
c) an extrusion coated inner heat sealable product contactable polymer material layer (58) forming the intended inner layer of the laminate;
d) an oxygen barrier layer (52) located between the substrate (46) and the inner polymer material layer (58);
e) a first layer of caulking polymer resin (48) located between the substrate (46) and the inner polymer material layer (58)
characterised in that the first caulking polymer resin layer and the oxygen barrier layer form part of a sandwich layer (51) comprising the first caulking polymer resin layer (48), a first abuse-resistant polymer resin layer (50), the oxygen barrier material layer (52), a second abuse-resistant polymer resin layer (45), a second layer of a caulking polymer resin (56), all coextruded in that sequence on the interior surface of said mechanically stable structural substrate (46)
and wherein the oxygen barrier material layer is selected from aluminium foil, ethylene vinyl alcohol copolymer, polyvinyl alcohol, polyethylene terephthalate, glycol-modified polyethylene terephthalate, acid modified polyethylene terephthalate, polybutylene terephthalate, vinylidene chloride copolymer, polyvinyl chloride polymer, vinyl chloride copolymer, polyamide polymer and polyamide copolymer, and
the caulking polymer resins comprise ionomer type resins such as salts of ethylene methacrylic acid, ethylene acrylic acid copolymers, ethylene vinyl acetate copolymers, ethylene methylacrylate copolymers and/or ethylene based graft copolymers, and
the outer and inner heat sealable polymer material is low density polyethylene, linear low density polyethylene, medium density polyethylene or blends thereof,
the abuse-resistant polymer is selected from polyamide polymers, polyethylene terephthalate, polybutylene terephthalate and ethylene vinyl alcohol copolymer, and the inner product contactable polymer material layer is heat-sealable with the outer layer of polymer material on conventional equipment at temperatures ranging from 121° to 260°C (250°F to 500°F), and the abuse-resistant polymer exhibits a tensile strength of 4.78 Bar (10,000 p.s.i.) or greater.

4. A laminate according to any of Claims 1 to 3 characterised in that the salts of ethylene methacrylic acid copolymers from which the caulking resin are selected from zinc or sodium salts of ethylene methacrylic acid copolymers, ethylene acrylic acid copolymers or ethylene methacrylic acid copolymers.

5. An oxygen impermeable side-seamed blank constructed from a laminate according to any of Claims 1 to 4.

6. A container incorporating a laminate structure according to any of Claims 1 to 4.

7. A container made from a blank according to Claim 5, the edges being sealed together by heat sealing.

## Patentansprüche

1. Eine Sauerstoffbarriere darstellende Laminatanordnung zur Erzielung eines für Sauerstoff undurchlässigen, leckfreien Containers, mit
a) einem mechanisch stabilen strukturellen Substrat (12), das aus gebleichter Pappe, ungebleichter Pappe, Wellpappe, Polyäthylen hoher Dichte, Polypropylen hoher Dichte und mehrlagigen Kombinationen davon ausgewählt ist, mit einer Innen- und einer Außenfläche,
b) einer äußeren Schicht aus heißversiegelbarem Polymermaterial (10), das auf die Außenfläche des mechanisch stabilen Substrats aufgebracht ist, um eine beabsichtigte Außenschicht des Laminats auszubilden,
c) einer ersten Schicht aus abdichtendem Polymerharz (14), das auf der Innenfläche des mechanisch stabilen strukturellen Substrats angeordnet ist,
d) einer Schicht (16) aus Sauerstoffbarrierematerial, die auf der Innenfläche der ersten abdichtenden Polymerharzschicht als Überzug aufgetragen ist,
e) einer durch Extrudieren überzogenen inneren heißversiegelbaren, mit dem Produkt in Kontakt bringbaren Polymermaterialschicht (24), die die beabsichtigte Innenschicht des Laminats ausbildet, wobei zwischen der Schicht (24) und der Sauerstoffbarriereschicht (16) das Laminat enthält
f) eine Sandwichschicht (23) aus einem zweiten abdichtendem Polymerharz (18), einer widerstandsfesten Polymerharzschicht (20), einem dritten abdichtenden Polymerharz (22), die alle in dieser Folge auf die Innenfläche der Sauerstoffbarrierematerialschicht extrudiert sind, und
wobei die Sauerstoffbarrierematerialschicht aus Aluminiumfolie, Äthylenvinylalkohol-Copolymer, Polyvinylalkohol, Polyäthylen-Terephthalat, glykolmodifiziertem Polyäthylen-Terephthalat, säuremodifiziertem Polyäthylen-Terephthalat, Polybutylen-Terephthalat, Vinylidenchlorid-Copolymer, Polyvinylchloridpolymer, Vinyllchlorid-Copolymer, Polyamidpolymer und Polyamid-Copolymer ausgewählt ist, und die abdichtenden Polymerharze aus ionimerartigen Harzen ausgewählt sind, z.B. Salzen der Äthylen-Methacrylsäure, Äthylen-Acrylsäure-Copolymeren, Äthylen-Vinylacetat-Copolymeren, Äthylen-Methylacrylat-Copolymeren und/oder veredelten Copolymeren auf Äthylenbasis, und
das äußere und das innere heißversiegelbare Polymermaterial Polyäthylen niedriger Dichte, lineares Polyäthylen niedriger Dichte, Polyäthylen mittlerer Dichte oder Mischungen davon ist,
das widerstandsfeste Polymer aus Polyamidpolymeren, Polyäthylen-Terephthalat, Polybutylen-Terephthalat und Äthylenvinylalkohol-Copolymer ausgewählt ist, und das innere Produkt, das mit der Polymermaterialschicht in Kontakt bringbar ist, mit der äußeren Schicht des Polymermaterials mit einem herkömmlichen Gerät bei Temperaturen zwischen 121° und 260° C heißversiegelbar ist, und das widerstandsfeste Polymer eine Zugfestigkeit von mindestens 4,78 BAR (10.000 p.s.i.) aufweist.

2. Eine Sauerstoffbarriere darstellende Laminatanordnung zur Erzielung eines für Sauerstoff undurchlässigen, leckfreien Containers, mit
a) einem mechanisch stabilen strukturellen Substrat (12), das aus gebleichter Pappe, ungebleichter Pappe, Wellpappe, Polyäthylen hoher Dichte, Polypropylen hoher Dichte und mehrlagigen Kombinationen davon ausgewählt ist, mit einer Innen- und einer Außenfläche,
b) einer äußeren Schicht aus heißversiegelbarem Polymermaterial (26), das auf die Außenfläche des mechanisch stabilen Substrats aufgebracht ist, um eine beabsichtigte Außenschicht des Laminats auszubilden,
c) einer durch Extrudieren überzogenen inneren heißversiegelbaren, mit dem Produkt verbindbaren Polymermaterialschicht (42), die die beabsichtigte Innenschicht des Laminats ausbildet,
d) einer Sauerstoffbarriereschicht (32), die zwischen dem Substrat (28) und der Innenschicht (42) aus polymerem Material angeordnet ist, und
e) einer ersten Schicht aus abdichtendem Polymerharz (36), die zwischen dem Substrat (28) und der Innenschicht (42) aus Polymermaterial angeordnet ist, dadurch gekennzeichnet, daß die Sauerstoffbarrierematerialschicht Teil einer ersten inneren Sandwichschicht (33) bestehend aus einer ersten klebenden Verbindungsschicht (30), der Sauerstoffbarrierematerialschicht (32) und einer zweiten klebenden Verbindungsschicht (34) ist, die alle in dieser Folge auf der Innenfläche des mechanisch stabilen baulichen Substrats (28) als Überzug aufgebracht sind, und die ersten und zweiten klebenden Verbindungsschichten aus Copolymeren auf Äthylenbasis mit veredelten funktionalen Gruppen, modifiziertem Polyäthylenharz, das Vinylacetat, Acrylat und Methacrylat-Comonomere aufweist, und einem Material auf Polyäthylen-Copolymer-Basis mit veredelten funktionalen Gruppen ausgewählt ist,
und daß die erste abdichtende Polymerharzschicht Teil einer zweiten inneren Sandwichschicht (39) bestehend aus der ersten abdichtenden Polymerharzschicht (36), einer widerstandsfesten Polymerharzschicht (38), und einer zweiten abdichtenden Polymerharzschicht (40) ist, die alle in dieser Folge auf die Innenfläche der zweiten klebenden Verbindungsschicht der ersten inneren Sandwichschicht (33) aufgebracht sind, wobei die Sauerstoffbarrierematerialschicht aus Aluminiumfolie, Äthylen-Vinylalkohol-Copolymer, Polyvinylalkohol, Polyäthylen-Terephthalat, glycolmodifiziertem Polyäthylen-Terephthalat, säuremodifiziertem Polyäthylen-Terephthalat, Polybutylen-Terephthalat, Vinylidenchlorid-Copolymer, Polyvinylchloridpolymer, Vinylchlorid-Copolymer, Polyamidpolymer und Polyamid-Copolymer ausgewählt ist, und
die abdichtenden Polymerharze aus ionomerartigen Harzen, z.B. Salzen der Äthylen-Methacrylsäure, Äthylen-Acrylsäure, Copolymeren, Äthylen-Vinylacetat-Copolymeren, Äthylen-Methylacrylat-Copolymeren und veredelten Copolymeren auf Äthylenbasis ausgewählt sind, und
das äußere und das innere heißsiegelbare Polymermaterial Polyäthylen niedriger Dichte, lineares Polyäthylen niedriger Dichte, Polyäthylen mittlerer Dichte oder Mischungen davon ist,
wobei das widerstandsfeste Polymer aus Polyamid-Polymeren, Polyäthylen-Terephthalat, Polybutylen-Terephthalat und Äthylen-Vinylalkohol-Copolymer ausgewählt ist, und die mit dem inneren Produkt in Kontakt kommende Polymermaterialschicht mit der äußeren Schicht von Polymermaterial auf einem herkömmlichen Gerät bei Temperaturen heißversiegelbar ist, die zwischen 121° und 260° betragen, und das widerstandsfeste Polymer eine Spannungsfestigkeit von mindestens 4,78 BAR (10.000 p.s.i.) hat.

3. Eine Sauerstoffbarriere darstellende Laminatanordnung zur Erzielung eines für Sauerstoff undurchlässigen, leckfreien Containers, mit
a) einem mechanisch stabilen strukturellen Substrat (46), das aus gebleichter Pappe, ungebleichter Pappe, Wellpappe, Polyäthylen hoher Dichte, Polypropylen hoher Dichte und mehrlagigen Kombinationen davon ausgewählt ist, mit einer Innen- und einer Außenfläche,
b) einer äußeren Schicht aus heißversiegelbarem Polymermaterial (44), die auf die Außenfläche des mechanisch stabilen Substrats aufgebracht ist, um eine beabsichtigte äußere Schicht des Laminats auszubilden.
c) einer durch Extrudieren überzogenen inneren heißversiegelbaren, mit dem Produkt verbindbaren Polymermaterialschicht (58), die die beabsichtigte Innenschicht des Laminats ausbildet,
d) einer Sauerstoffbarriereschicht (52), die zwischen dem Substrat (46) und der inneren Polymermaterialschicht (58) angeordnet ist, und
e) einer ersten Schicht aus abdichtendem Polymerharz (48), die zwischen dem Substrat (46) und der inneren Polymermaterialschicht (58) angeordnet ist,
dadurch gekennzeichnet, daß die erste abdichtende Polymerharzschicht und die Sauerstoffbarriereschicht einen Teil einer Sandwichschicht (51) bilden, die die erste abdichtende Polymerharzschicht (48), eine erste widerstandsfeste Polymerharzschicht (50), die Sauerstoffbarrierematerialschicht (52), eine zweite widerstandsfeste Polymerharzschicht (45), und eine zweite Schicht aus abdichtendem Polymerharz (56) umfaßt, wobei alle vorgenannten Schichten in dieser Folge auf die Innenfläche des mechanisch stabilen strukturellen Substrats (46) coextrudiert sind, und
wobei die Sauerstoffbarrierematerialschicht aus Aluminiumfolie, Äthylenvinylalkohol-Copolymer, Polyvinylalkohol, Polyäthylen-Terephthalat, glykolmodifiziertem Polyäthylen-Terephthalat, säuremodifiziertem Polyäthylen-Terephthalat, Polybutylen-Terephthalat, Vinylidenchlorid-Copolymer, Polyvinylchloridpolymer, Vinyllchlorid-Copolymer, Polyamidpolymer und Polyamid-Copolymer ausgewählt ist, und
die abdichtenden Polymerharze aus ionomerartigen Harzen ausgewählt sind, z.B. Salzen der Äthylen-Methacrylsäure, Äthylen-Acrylsäure-Copolymeren, Äthylen-Vinylacetat-Copolymeren, Äthylen-Methylacrylat-Copolymeren und/oder veredelten Copolymeren auf Äthylenbasis, und
das äußere und das innere heißversiegelbare Polymermaterial Polyäthylen niedriger Dichte, lineares Polyäthylen niedriger Dichte, Polyäthylen mittlerer Dichte oder Mischungen davon ist,
und wobei das abriebfeste Polymer aus Polyamidpolymeren, Polyäthylen-Terephthalat, Polybutylen-Terephthalat und Äthylenvinylalkohol-Copolymer ausgewählt ist, und das innere Produkt, das mit der Polymermaterialschicht in Kontakt bringbar ist, mit der äußeren Schicht des Polymermaterials auf einem herkömmlichen Gerät bei Temperaturen zwischen 121° ^{und} 260° C heißversiegelbar ist, und das widerstandsfeste Polymer eine Zugfestigkeit von mindestens 4,78 BAR (10.000 p.s.i.) aufweist.

4. Laminat nach einem der Ansprüche 1 - 3, dadurch gekennzeichnet, daß die Salze der Äthylen-Methacrylsäure-Copolymere, aus denen das abdichtende Harz besteht, aus Zink oder Natriumsalzen von Äthylen-Methacrylsäure-Copolymeren, Äthylen-Acrylsäurecopolymeren oder Äthylen-Methacrylsäure-Copolymeren ausgewählt sind.

5. Sauerstoffundurchlässiger, an den Seiten gesäumter Rohling, bestehend aus einem Laminat nach einem der Ansprüche 1 - 4.

6. Behälter mit einer Laminatstruktur nach einem der Ansprüche 1 - 4.

7. Behälter aus einem Rohling nach Anspruch 5, dessen Ränder durch Heißversiegeln miteinander verbunden sind.

## Revendications

1. Structure stratifiée barrière à l'oxygène convenant pour la production d'un récipient sans fuite et imperméable à l'oxygène comprenant :
a) un substrat porteur mécaniquement stable (12) choisi parmi du carton blanchi, du carton non blanchi, du carton ondulé, du polyéthylène haute densité, du polypropylène haute densité et des combinaisons à couches multiples de ceux-ci, présentant une surface interne et une surface externe ;
b) une couche externe de matériau polymère thermosoudable (10) appliquée sur la surface externe dudit substrat porteur mécaniquement stable pour former la couche externe voulue du stratifié ;
c) une première couche de résine polymère de calfatage (14) placée sur la surface interne dudit substrat porteur mécaniquement stable ;
d) une couche de matériau barrière à l'oxygène (16) déposée sur la surface interne de la première couche de résine de polymère de calfatage ;
e) une couche interne (24) de matériau polymère pouvant être mise en contact avec le produit, thermosoudable, déposée par extrusion, formant la couche interne voulue du stratifié
dans laquelle le stratifié comprend, entre la couche interne (24) pouvant être mise en contact avec le produit, thermosoudable , et la couche barrière à l'oxygène (16)
f) une couche en sandwich (23) d'une seconde résine polymère de calfatage (18), d'une couche de résine polymère résistant à la dégradation (20), d'une troisième résine polymère de calfatage (22), toutes coextrudées dans cet ordre sur la surface interne de la couche de matériau barrière à l'oxygène ; et
dans laquelle la couche de matériau barrière à l'oxygène est choisie parmi une feuille d'aluminium, un copolymère éthylène-alcool vinylique, du poly(alcool vinylique), du poly(téréphtalate d'éthylène), du poly(téréphtalate d'éthylène) modifié par un glycol, du poly(téréphtalate d'éthylène) modifié par un acide, du poly(téréphtalate de butylène), un copolymère de chlorure de vinylidène, du poly(chlorure de vinyle), un copolymère de chlorure de vinyle, un polymère polyamide, et un copolymère à base de polyamide, et
les résines polymère de calfatage sont choisies parmi des résines de type ionomère comme des sels d'éthylèneacide méthacrylique, des copolymères éthylène-acide acrylique, des copolymères éthylène-acétate de vinyle, des copolymères éthylène-acrylate de méthyle et/ou des copolymères greffés à base d'éthylène, et
le matériau polymère interne et externe thermosoudable est du polyéthylène basse densité, du polyéthylène linéaire basse densité, du polyéthylène moyenne densité ou des mélanges de ceux-ci,
le polymère résistant à la dégradation est choisi parmi des polymères polyamide, du poly(téréphtalate d'éthylène), du poly(téréphtalate de butylène), et un copolymère éthylène-alcool vinylique, et
la couche de matériau polymère interne pouvant être mise en contact avec le produit est thermosoudable avec la couche externe de matériau polymère dans un appareil classique à des températures variant de 121° à 260°C (250°F à 500°F), et le polymère résistant à la détérioration présente une résistance à la traction de 4,78 bars (10 000 psi) ou plus.

2. Structure stratifiée barrière à l'oxygène convenant pour la production d'un récipient sans fuite et imperméable à l'oxygène comprenant :
a) un substrat porteur mécaniquement stable (28) choisi parmi du carton blanchi, du carton non blanchi, du carton ondulé, du polyéthylène haute densité, du polypropylène haute densité et des combinaisons à couches multiples de ceux-ci, présentant une surface interne et une surface externe ;
b) une couche externe de matériau polymère thermosoudable (26) appliquée sur la surface externe dudit substrat porteur mécaniquement stable pour former la couche externe voulue du stratifié ;
c) une couche interne (42) de matériau polymère pouvant être mise en contact avec le produit, thermosoudable, déposée par extrusion , formant la couche interne voulue du stratifié ;
d) une couche de matériau barrière à l'oxygène (32) placée entre le substrat (28) et la couche de matériau polymère interne (42);
e) une première couche de résine polymère de calfatage (36) placée entre le substrat (28) et la couche de matériau polymère interne (42)
caractérisée en ce que la couche de matériau barrière à l'oxygène fait partie d'une première couche interne en sandwich (33) d'une première couche de liaison d'adhésif (30), de la couche de matériau barrière à l'oxygène (32), et d'une seconde couche de liaison d'adhésif (34), toutes déposées dans cet ordre sur la surface interne dudit substrat porteur mécaniquement stable (28), et lesdites première et seconde couches de liaison d'adhésif sont choisies parmi des copolymères à base d'éthylène ayant des groupes fonctionnels greffés, une résine polyéthylène modifiée contenant des comonomères d'acétate de vinyle, d'acrylate et de méthacrylate, et un matériau à base de copolymère d'éthylène ayant des groupes fonctionnels greffés;
et caractérisée en ce que la première couche de résine de polymère de calfatage fait partie d'une seconde couche interne en sandwich (39) de la première couche de résine de polymère de calfatage (36), d'une couche de résine de polymère résistant à la dégradation (38), d'une seconde couche de résine de polymère de calfatage (40), toutes déposées dans cet ordre sur la surface interne de la seconde couche de liaison d'adhésif de la première couche interne en sandwich (33) ;
et dans laquelle la couche de matériau barrière à l'oxygène est choisie parmi une feuille d'aluminium, un copolymère éthylène-alcool vinylique, du poly(alcool vinylique), du poly(téréphtalate d'éthylène), du poly(téréphtalate d'éthylène) modifié par un glycol, du poly(téréphtalate d'éthylène) modifié par un acide, du poly(téréphtalate de butylène), un copolymère de chlorure de vinylidène, un poly(chlorure de vinyle), un copolymère de chlorure de vinyle, un polymère polyamide, et un copolymère à base de polyamide, et
les résines polymère de calfatage sont choisies parmi des résines de type ionomère comme des sels d'éthylène-acide méthacrylique, des copolymères éthylène-acide acrylique, des copolymères éthylène-acétate de vinyle, des copolymères éthylène-acrylate de méthyle et des copolymères greffés à base d'éthylène, et
le matériau polymère interne et externe thermosoudable est du polyéthylène basse densité, du polyéthylène linéaire basse densité, du polyéthylène moyenne densité ou des mélanges de ceux-ci,
le polymère résistant à la dégradation est choisi parmi des polymères de polyamide, du poly(téréphtalate d'éthylène), du poly(téréphtalate de butylène), et un copolymère éthylène-alcool vinylique, et
la couche de matériau polymère interne pouvant être mise en contact avec le produit est thermosoudable avec la couche externe de matériau polymère dans un appareil classique à des températures variant de 121° à 260°C (250°F à 500°F), et le polymère résistant à la détérioration présente une résistance à la traction de 4,78 bars (10 000 psi) ou plus.

3. Structure stratifiée barrière à l'oxygène convenant pour la production d'un récipient sans fuite et imperméable à l'oxygène comprenant :
a) un substrat porteur mécaniquement stable (46) choisi parmi du carton blanchi, du carton non blanchi, du carton ondulé, du polyéthylène haute densité, du polypropylène haute densité et des combinaisons à couches multiples de ceux-ci, présentant une surface interne et une surface externe ;
b) une couche externe de matériau polymère thermosoudable (44) appliquée sur la surface externe dudit substrat porteur mécaniquement stable pour former la couche externe voulue du stratifié ;
c) une couche interne (58) de matériau polymère pouvant être mise en contact avec le produit, thermosoudable, déposée par extrusion , formant la couche interne voulue du stratifié ;
d) une couche de matériau barrière à l'oxygène (52) placée entre le substrat (46) et la couche interne (58) de matériau polymère ;
e) une première couche de résine polymère de calfatage (48) placée entre le substrat (46) et la couche interne (58) de matériau polymère
caractérisée en ce que la première couche de résine polymère de calfatage et la couche barrière à l'oxygène font partie d'une couche en sandwich (51) comprenant la première couche de résine polymère de calfatage (48), une première couche de résine de polymère résistant à la dégradation (50), la couche barrière à l'oxygène (52), une seconde couche de résine polymère résistant à la dégradation (54) une seconde couche de résine polymère de calfatage (56), toutes coextrudées dans cet ordre sur la surface intérieure dudit substrat porteur mécaniquement stable (46)
et dans laquelle la couche de matériau barrière à l'oxygène est choisie parmi une feuille d'aluminium, un copolymère éthylène-alcool vinylique, du poly(alcool vinylique), du poly(téréphtalate d'éthylène), du poly(téréphtalate d'éthylène) modifié par un glycol, du poly(téréphtalate d'éthylène) modifié par un acide, du poly(téréphtalate de butylène), un copolymère de chlorure de vinylidène, un poly(chlorure de vinyle), un copolymère de chlorure de vinyle, un polymère polyamide, et un copolymère de polyamide, et
les résines polymère de calfatage englobent des résines de type ionomère comme des sels d'éthylène-acide méthacrylique, des copolymères éthylène-acide acrylique, des copolymères éthylène-acétate de vinyle, des copolymères éthylène-acrylate de méthyle et/ou des copolymères greffés à base d'éthylène, et
le matériau polymère interne et externe thermosoudable est du polyéthylène basse densité, du polyéthylène linéaire basse densité, du polyéthylène moyenne densité ou des mélanges de ceux-ci,
le polymère résistant à la dégradation est choisi parmi des polymères polyamide, du poly(téréphtalate d'éthylène), du poly(téréphtalate de butylène), et un copolymère éthylène-alcool vinylique, et
la couche interne de matériau polymère pouvant être mise en contact avec le produit est thermosoudable avec la couche externe de matériau polymère dans un appareil classique à des températures variant de 121° à 260°C (250°F à 500°F), et le polymère résistant à la détérioration présente une résistance à la traction de 4,78 bars (10 000 psi) ou plus.

4. Stratifié selon l'une quelconque des revendications 1 à 3, caractérisé en ce que les sels de copolymères éthylène-acide méthacrylique à partir desquels est choisie la résine de calfatage sont des sels de zinc ou de sodium de copolymères éthylène-acide méthacrylique, copolymères éthylène-acide acrylique ou copolymères éthylène-acide méthacrylique.

5. Pièce découpée à côtés joints, imperméable à l'oxygène, fabriquée à partir d'un stratifié selon l'une quelconque des revendications 1 à 4.

6. Récipient comprenant une structure stratifiée selon l'une quelconque des revendications 1 à 4.

7. Récipient fabriqué à partir d'une pièce découpée selon la revendication 5, dont les bords sont soudés les uns aux autres par thermosoudage.
